Europäisches Patentamt

European Patent Office

Office européen des brevets

(11) Publication number : **0 559 389 A2**

(12) **EUROPEAN PATENT APPLICATION**

(21) Application number : 93301460.7

(22) Date of filing : 26.02.93

(51) Int. Cl.$^5$ : **C03C 3/091**

(30) Priority : **03.03.92 GB 9204537**

(43) Date of publication of application :
**08.09.93 Bulletin 93/36**

(84) Designated Contracting States :
**BE CH DE ES FR GB IT LI LU NL PT SE**

(71) Applicant : **PILKINGTON PLC**
**Prescot Road**
**St. Helens, Merseyside WA10 3TT (GB)**

(72) Inventor : **Yale, Brian**
**18 Claremont Drive**
**Ormskirk, Lancashire L39 4SP (GB)**
Inventor : **Parker, Bernard**
**9 Doric Green, Billinge**
**Wigan, Lancashire WN5 7BP (GB)**

(74) Representative : **Pendlebury, Anthony et al**
**PAGE, WHITE & FARRER 54 Doughty Street**
**London WC1N 2LS (GB)**

(54) **Alkali-free glass compositions.**

(57)    Glass compositions consisting essentially of the following components :-
$SiO_2$
60.0 - 63.0 mol%,
$Al_2O_3$
9.5 - 12.0 mol%,
the total amount of $SiO_2$ + $Al_2O_3$ being within the range 70.5 - 73.0 mol%,
$B_2O_3$
9.0 - 11.5 mol%,
MgO
3.0 - 13.0 mol%,
CaO
0 - 8.0 mol%,
BaO
3.0 - 9.0 mol%,
the total amount of MgO + CaO + BaO being within the range 16.0 - 19.0 mol%,
$TiO_2$
0 - 1.0 mol%,
$P_2O_5$
0 - 1.0 mol%, and
$Fe_2O_3$
0 - 0.2 mol%,
the glass compositions being free of alkali-metal oxide, free of strontium oxide and free of zinc oxide.
    These glass compositions are particularly suitable for use in liquid crystal devices which incorporate thin film transistors.

EP 0 559 389 A2

Jouve, 18, rue Saint-Denis, 75001 PARIS

The present invention relates to alkali-free glass compositions intended for use in liquid crystal display devices, more particularly for use in liquid crystal display devices which incorporate thin film transistors (TFT's).

Glass compositions for use in such advanced liquid crystal display devices must meet certain very stringent criteria. In the manufacture of liquid crystal display devices which incorporate thin film transistors, large arrays of thin film transistors are formed directly on the surface of thin sheets of glass. The thin film transistors are generally grown in situ on a sheet of the substrate glass which has been pre-treated to provide a layer of polysilicon on the glass. The production of such polysilicon layers on the glass substrate is usually performed by processes at elevated temperatures which means that the glass compositions used as the substrate in such devices must be compositions having a relatively high strain point temperature. Typically, the strain point temperature of the glass must be at least 600°C, more preferably greater than 630°C.

A further requirement for the glass composition is that it should have a coefficient of thermal expansion which is similar to that of silicon. The coefficient of thermal expansion of silicon is approximately $38 \times 10^{-7}$ deg $C^{-1}$ over the range 50 - 350°C. A precise match is not necessary, but the difference in the expansion coefficients of the glass and silicon should be no more than about 20%.

A further property which the glass composition must possess is that it must be capable of withstanding treatment with the reagents which are used in the process used for depositing the thin film transistor array on the glass. Such reagents include mineral acids and buffered hydrofluoric acid.

An additional requirement is that the glass composition should be substantially free of alkali metal ions. If alkali metal ions are present in the glass composition they are likely to diffuse into the transistor matrix and cause deterioration of the properties of the transistor matrix.

A yet further requirement is that the glass composition must be capable of being produced in high quality sheet form at low cost and must be capable of undergoing the melting and forming processes which are used in thin flat glass manufacture.

For economic melting and refining the maximum melt temperature should preferably not exceed about 1540°C so as to avoid excessive furnace refractory corrosion; to make this possible the melt should have a log viscosity below about 2.2 at 1550°C.

Alkali-free glasses are difficult to form by the traditional window glass drawing process, and the process principally used in recent years has been the slot-bushing down-drawn sheet process. Recently the float process has been used, also a more modern down-draw sheet process known as the Corning fusion process. This latter process requires a very high melt viscosity at the liquidus temperature of about $3 \times 10^5$ poises which is difficult to achieve in combination with the melting requirements described above. The slot bushing and the float process require a minimum viscosity at the liquidus temperature of about $2 \times 10^4$ poises which is easier to achieve and it is for these processes that the compositions of the present invention are primarily intended.

Both the slot bushing and the float processes were developed for soda-lime glasses which have working temperatures in the range 1000°C to 1050°C, and difficulties accrue as the working temperature of the melt (i.e. the temperature at which the viscosity is $1 \times 10^4$ poise) exceeds 1100°C, and become excessive as the working temperature exceeds about 1200°C. It is therefore desirable, for economic melting, to have melts which have log viscosities below about 2.2 at 1550°C, and for forming the working temperature should be below about 1220°C, preferably below 1200°C, and the liquidus temperature should be about 50°C (or more) below the working temperature so as to increase the viscosity at the liquidus temperature to about $2 \times 10^4$ poise.

It is known that glasses which meet the above-mentioned requirements are boroaluminosilicate glasses of the oxide system : $RO- Al_2O_3- B_2O_3- SiO_2$ wherein $RO$ represents an oxide selected from MgO, CaO, SrO, BaO and ZnO. In these glass compositions, the RO components provide the cations which are necessary for glass melting and for the formation of a single phase melt, but too high a concentration of oxides of the RO type increases the coefficient of thermal expansion of the resultant glass composition too much and renders the resultant glass unsuitable for use in the manufacture of silicon based thin film transitor liquid crystal display devices.

It is therefore necessary carefully to select and balance the component oxides of the glass composition so as to obtain the required combination of desired melt characteristics of the glass batch and the desired properties in the resultant glass composition.

WO 89/02877 (Asahi Glass Company Ltd) describes an alkali-free glass composition consisting essentially of from 55 to 70 mol% of $SiO_2$, from 5 to 15 mol% of $Al_2O_3$, from 10 to 25 mol% of $B_2O_3$, from 72 to 80 mol% of $SiO_2 + B_2O_3$, from 1 to 6 mol% of MgO, from 0 to 6 mol% of CaO, from 3 to 12 mol% of SrO and from 3 to 12 mol% of BaO and essentially free from alkali metal oxide and zinc oxide. These glass compositions are said to be capable of being formed into sheets by a float method, but they all incorporate strontium oxide as an essential ingredient. Strontium is a significantly more expensive material than other alkaline-earth metal oxides, and there are cost advantages in eliminating strontium oxide from the glass composition.

A further category of alkaline-earth metal oxide boroalumino silicate glasses is disclosed in U.S. Patent No. 4824808 (Corning Glass Works). These glass compositions consist essentially, in cation percent, of about 52-58% $SiO_2$, 12.5-18% $Al_2O_3$, 20-23% $B_2O_3$, 0-4% MgO, 0-6% CaO, 0-6% SrO, 1-9% BaO, 8-12% MgO+CaO+SrO+BaO, 0-3% ZnO and 0-1% of fining agents. The expansion coefficients of these glass compositions are very close to the expansion coefficient of silicon, and the glass compositions are particularly suited to down-drawn flat sheet manufacture by a method known as the fusion process. However, the melt viscosities of the glass compositions described in this document will be higher than is desirable for other glass forming methods such as the float process, and the working temperatures of these compositions will exceed 1200°C, which as we have indicated above is undesirable.

U.S. Patent No. 4994415 (Nippon Electric Glass Company Limited) discloses a further class of boroaluminosilicate glasses. These glass compositions consist essentially of 55-58 wt% $SiO_2$, 8-13 wt% $Al_2O_3$, 4-10 wt% $B_2O_3$, 4-7 wt% CaO, 11-20 wt% BaO, 0-5 wt% SrO and 0.5-7 wt% ZnO, and are free from alkali metal oxide, lead oxide and magnesium oxide. As has been indicated above, strontium is a relatively costly material and it is desirable to avoid use of strontium, if possible. In the Examples which illustrate the invention in U.S. Patent 4994415, all but one of the compositions incorporates SrO. Furthermore all of the compositions which are said to illustrate the invention incorporate ZnO; however, we have found that ZnO is undesirable for glass compositions which are to be subjected to float forming. Finally, it will be seen that the presence of MgO is specifically excluded from the compositions of this U.S. Patent, so that this patent fails to capitalise on the value of magnesium oxide as a glass component.

The present invention aims to provide an alkali-free boroaluminosilicate glass composition which meets the various criteria discussed above required in a glass composition which is to be used in making advanced liquid crystal display devices, the said composition also being free of zinc oxide and strontium oxide.

According to the present invention there is provided a boroaluminosilicate glass composition consisting essentially of the following components:-

| | |
|---|---|
| $SiO_2$ | 60.0 - 63.0 mol%, |
| $Al_2O_3$ | 9.5 - 12.0 mol%, |

the total amount of $SiO_2$ + $Al_2O_3$ being within the range 70.5 - 73.0 mol%,

| | |
|---|---|
| $B_2O_3$ | 9.0 - 11.5 mol%, |
| MgO | 3.0 - 13.0 mol%, |
| CaO | 0 - 8.0 mol%, |
| BaO | 3.0 - 9.0 mol%, |

the total amount of MgO + CaO + BaO being within the range 16.0 - 19.0 mol%,

| | |
|---|---|
| $TiO_2$ | 0 - 1.0 mol%, |
| $P_2O_5$ | 0 - 1.0 mol%, and |
| $Fe_2O_3$ | 0 - 0.2 mol%, |

the glass composition being free of alkali-metal oxide, free of strontium oxide and free of zinc oxide.

In the preferred compositions of the invention the total amount of $SiO_2$ + $Al_2O_3$ is from 71.0 to 72.5%; most preferably the amount of $SiO_2$ is from 61.0 to 63.0 mol% and the amount of $Al_2O_3$ is from 9.5 to 10.5 mol%, with the total amount of $SiO_2$ + $Al_2O_3$ being within the range. 71.0 to 72.5 mol%.

In the glass compositions of the present invention MgO is utilised as a key component in achieving a balance between minimising the melt viscosity of the batch of glass-forming components without increasing the coefficient of thermal expansion of the resultant glass composition by an undesired extent.

In the glass compositions of the present invention the range of the total amount of the RO components (i.e. MgO + CaO + BaO) is very narrow, i.e. only from 16 to 19 mol%. If the total amount of these alkaline earth metal oxides is above 19 mol%, the expansion coefficient of the resultant glass is found to exceed about 45 x $10^{-7}$ deg $C^{-1}$, which makes it incompatible with the expansion coefficient of silicon. On the other hand, if the total amount of these alkaline earth metal oxides is below 16 mol%, the melt viscosity of the glass can only be kept to the desired low levels by increasing the amount of $B_2O_3$ in the glass, but this has the adverse consequence of causing the resistance of the glass to attack by mineral acids and other reagents to deteriorate by an unacceptable extent, and the working temperature $(T_W)$ of the glass melt will exceed 1220°C.

Boron oxide $(B_2O_3)$ is an essential component of the glass compositions of the present invention; its presence is responsible for reducing the melt viscosity of the glass and the liquidus temperature without increasing the expansion coefficient by unacceptable amounts. However, the resistance of the glass to attack by reagents such as hydrochloric acid begins to deteriorate as the level of $B_2O_3$ exceeds about 12 mol%. Accordingly, a safe upper limit for the amount of $B_2O_3$ in the glass compositions of the present invention is 11.5 mol%. When the amount of $B_2O_3$ is at this maximum value or close to this upper limit, then preferably the total amount of the RO components in the composition should be towards the lower end of the specified range (i.e. towards the 16.0 mol% value), as shown in Example 27 in Table I below. In particularly preferred glass compositions of the invention the amount of $B_2O_3$ ranges from 10.0 to 11.0 mol%.

Magnesium oxide is a further essential component of the glass compositions of the present invention and is used to reduce the melt viscosity of the glass compositions. All of the RO-type oxides reduce the melt viscosity of the glass compositions by approximately the same extent (when calculated on a mol% basis), but MgO increases the coefficient of expansion of the resultant glass composition by a much smaller amount than does BaO, i.e. MgO increases the coefficient of expansion by only about half as much as the increase caused by BaO. Thus, MgO is preferred; however, care must be taken to avoid adding too much MgO because an excess of this oxide can cause phase separation to occur in the cooling melt. Accordingly, it is necessary to balance carefully the amounts of the various component RO-type oxides of the glass composition to prevent such phase separation from occurring. None of the glass compositions in accordance with the invention as set out in Table I below exhibited visible phase separation.

Barium oxide, another RO-type oxide, is also an essential component of the glass compositions of the present invention. Barium oxide generally leads to lower liquidus temperatures than is the case with calcium oxide or magnesium oxide, and barium oxide has the lowest tendency to cause undesired phase separation, but this oxide increases the expansion coefficient of the glass composition the most. We have found that careful balancing of the RO-type oxides in the composition (ie oxides of magnesium, calcium and barium) allows the total amount of the RO-type oxides in the composition to be maximised without the coefficient of linear thermal expansion of the glass increasing to above about $45 \times 10^{-7}$ deg $C^{-1}$, and without phase separation occuring. By maximising the content of RO-type oxides in the glass to a value within the range 16 to 19 mol%, the $B_2O_3$ content of the glass composition can be kept to a value below 12 mol%, thereby improving the resistance of the glass to chemical attack by reagents such as hydrofluoric acid.

Preferred amounts of MgO, CaO and BaO are:-

MgO   5.0 - 13.0 mol%, more preferably 5.0 - 7.0 mol%;

CaO   0 - 8.0 mol%, more preferably 5.0 - 7.0 mol%;

BaO   4.0 - 8.0 mol%.

Minor amounts of $TiO_2$ (see Example 13) and/or $P_2O_5$ (see Example 20) may be added to keep to reduce the melt viscosity of the glass composition. However, $TiO_2$ imparts a pale yellow-brown colouration to the glass compositions and more than 1 mol% of this additive is undesirable. The presence of $P_2O_5$ aggravates phase separation in the glass compositions and also causes a deterioration in the durability of the glass compositions. Accordingly, it is undesirable to add more than 1 mol% of this additive to the glass compositions.

Conventional refining agents such as antimony oxide, arsenic oxide or sulphates of magnesium, calcium or barium may be added in small amounts. Typically, antimony oxide and arsenic oxide may each be added in amounts of up to 0.2 mol%, whilst magnesium, calcium and barium sulphates may each be present in amounts of up to 0.3 mol% $SO_3$. Care must be taken that these additives should not adversely affect the desired properties of the glass composition. It should be noted that with glass compositions which are to be subjected to float forming, antimony and arsenic oxides are undesirable.

Glasses within the scope of the invention may optionally incorporate other known constituents such as colourants or other additives, used in minor proportions to modify melting characteristics, appearance and/or other glass properties.

However, such additives should be added only in very limited amounts in order to maintain the composition limits specified above, since as will be shown hereinbelow glass compositions outside the said composition limits have been found not to possess the desired properties.

The principal desired physical characteristics of the resultant glass compositions are the following:-

(i) a coefficient of linear thermal expansion which is no higher than $47 \times 10^{-7}$ deg $C^{-1}$ and within the range 40 - 47 x $10^{-7}$ deg $C^{-1}$;

(ii) a working temperature $(T_W)$ below 1220°C, more preferably below 1200°C;

(iii) a liquidus temperature $(T_L)$ which is 50° or more below the working temperature; more preferably at least 75°C below the working temperature of the glass composition, the liquidus temperature ($T_L$) preferably being 1120°C or below; and

(iv) a strain point ($T_{14.5}$) which is greater than 630°C, and more preferably greater than 640°C; and

(v) an acid durability (weight loss) as defined below which is below 20 mg $cm^{-2} day^{-1}$.

The glass compositions of the present invention may be formed from conventional glassmaking materials such as silica (quartz) sand, calcined alumina, boric acid and alkaline earth carbonates. It is particularly advantageous to use a fine particle size silica sand or a ground sand. It is also convenient, but by no means essential, to use dolomite ($MgCO_3.CaCO_3$) as the source of both magnesium and calcium, and many of the glass compositions given in the following Examples will be seen to have equimolar amounts of CaO and MgO for this reason. The mixed batch of raw materials may be melted in a conventional glass melting furnace, though it will be necessary to select carefully the furnace refractories so as to have a sufficiently good resistance to corrosion as will be understood by those skilled in the art. The glass melt is then cooled to the working temperature and formed by either the slot bushing process or the float process.

The present invention is illustrated by the Examples set out in Table I. Table II gives a number of Comparative Examples which illustrate how the desirable properties of the glass compositions of the present invention are lost when the components of the glass composition fall outside the specified limits.

The abbreviations used in Tables I and II have the following meanings:-

| | |
|---|---|
| RO | represents the total amount of MgO + CaO + BaO; |
| CTE | represents the coefficient of thermal expansion over the temperature range 50 to 350°C, (measured in deg $C^{-1}$); |
| $T_L$ | is the liquidus temperature (in °C); |
| $T_W$ | is the ASTM working temperature (in °C); corresponding to a melt viscosity of 1 x $10^4$ poise (or d PaS); |
| $T_{13}$ | is the ASTM annealing point (in °C); |
| $T_{14.5}$ | is the strain point (in °C); |
| log. visc. (1550°C) | represents the log viscosity at 1550°C. (For economic melting this value should be less than about 2.20); and |
| Acid durab. | represents the acid durability which is defined as the weight loss (in mg $cm^{-2} day^{-1}$) when a sample of the glass is exposed to 5% aqueous hydrochloric acid at 95°C. |

An example of a particularly suitable glass composition is shown in Example 9. This glass has a working temperature below 1200°C; a low liquidus temperature of 1070°C with a correspondingly low rate for crystal growth; a good acid durability; a strain point 20°C above the required minimum (630°C) and a coefficient of expansion low enough to accept silicon deposition and crystallisation without mismatch problems. This glass was also tested in buffered hydrofluoric acid, and exhibited a relatively low rate of solution of 0.035 mg $cm^{-2}$ $min^{-1}$ with no turbidity. Heat treatment in a temperature gradient from 1020°C to 700°C for four hours showed no visible opacity due to phase separation.

Comparative Examples 28 - 33 in Table II show how the desirable properties of the glass compositions of the present invention are lost when the composition is outside the specified limits.

Example 28 shows how durability deteriorates with increased $B_2O_3$, rising above the desired minimum weight loss value of 20 mg $cm^{-2}$ $day^{-1}$.

Example 29 contains insufficient alumina, and whilst it appears to have satisfactory properties this glass shows opacity due to phase separation when heat treated below 850°C, which would be unacceptable for LCD manufacture.

Example 30 shows how the expansion coefficient increases above the desired limit of 45 x $10^{-7}$ deg $C^{-1}$ and becomes too high when the barium oxide content exceeds the specified limit.

Example 31 shows a glass in which the RO content is insufficient (and the silica content correspondingly too great) to give the desired working temperature (i.e. below 1220°C).

Example 32 shows how, with barium excluded, the liquidus temperature is too high. This glass also phase separated on heat treatment below 960°C.

Example 33 shows that a composition lying within the claims of U.S. 4824808 exhibits a melt viscosity which is excessively high, with $T_W$ much greater than 1220°C.

TABLE I : EXAMPLES

|  | 1 | | 2 | | 3 | | 4 | |
|---|---|---|---|---|---|---|---|---|
|  | Mol% | Wt% | Mol% | Wt% | Mol% | Wt% | Mol% | Wt% |
| $SiO_2$ | 61.0 | 53.7 | 62.0 | 53.3 | 62.0 | 52.5 | 62.0 | 51.6 |
| $Al_2O_3$ | 10.0 | 14.9 | 10.0 | 14.6 | 10.0 | 14.4 | 10.0 | 14.2 |
| $B_2O_3$ | 10.0 | 10.2 | 11.0 | 11.0 | 11.0 | 10.8 | 11.0 | 10.6 |
| MgO | 13.0 | 7.7 | 10.0 | 5.8 | 9.0 | 5.1 | 8.0 | 4.5 |
| CaO | – | – | – | – | – | – | – | – |
| BaO | 6.0 | 13.5 | 7.0 | 15.3 | 8.0 | 17.2 | 9.0 | 19.1 |
| $TiO_2$ | – | – | – | – | – | – | – | – |
| $P_2O_5$ | – | – | – | – | – | – | – | – |
| $Fe_2O_3$ | – | – | – | – | – | – | – | – |
| $SiO_2$+$Al_2O_3$ | 71.0 | – | 72.0 | – | 72.0 | – | 72.0 | – |
| Σ RO | 19.0 | – | 17.0 | – | 17.0 | – | 17.0 | – |
| CTE | $41.0 \times 10^{-7}$ | | $41.3 \times 10^{-7}$ | | $43.3 \times 10^{-7}$ | | $46.0 \times 10^{-7}$ | |
| $T_L$ | 1100°C | | 1065°C | | 1080°C | | 1085°C | |
| $T_W$ | 1194°C | | 1195°C | | 1198°C | | 1208°C | |
| $T_{13}$ | 718°C | | | | | | | |
| $T_{14.5}$ | 685°C | | | | | | | |
| log.visc (1550°C) | 1.95 | | 2.12 | | 2.17 | | 2.18 | |
| Acid durab. | 8.0 | | 9.6 | | 8.8 | | 10.2 | |

TABLE I : EXAMPLES Contd..

| | 5 | | 6 | | 7 | | 8 | |
|---|---|---|---|---|---|---|---|---|
| | Mol% | Wt% | Mol% | Wt% | Mol% | Wt% | Mol% | Wt% |
| $SiO_2$ | 62.0 | 54.6 | 62.0 | 56.4 | 62.0 | 51.6 | 62.5 | 54.9 |
| $Al_2O_3$ | 10.0 | 14.9 | 10.0 | 15.4 | 10.0 | 14.1 | 10.0 | 14.9 |
| $B_2O_3$ | 10.0 | 10.2 | 10.0 | 10.5 | 10.0 | 9.6 | 10.0 | 10.2 |
| MgO | 7.0 | 4.2 | 9.0 | 5.5 | 7.0 | 3.9 | 6.5 | 3.9 |
| CaO | 6.0 | 4.9 | 6.0 | 5.1 | 2.0 | 1.6 | 6.0 | 4.9 |
| BaO | 5.0 | 11.2 | 3.0 | 7.0 | 9.0 | 19.1 | 5.0 | 11.2 |
| $TiO_2$ | – | – | – | – | – | – | – | – |
| $P_2O_5$ | – | – | – | – | – | – | – | – |
| $Fe_2O_3$ | – | – | – | – | – | – | – | – |
| $SiO_2+$ $Al_2O_3$ } | 72.0 | – | 72.0 | – | 72.0 | – | 72.5 | – |
| $\Sigma$ RO | 18.0 | – | 18.0 | – | 18.0 | – | 17.5 | – |
| CTE | $44.0 \times 10^{-7}$ | | $41.0 \times 10^{-7}$ | | $43.9 \times 10^{-7}$ | | $41.7 \times 10^{-7}$ | |
| $T_L$ | $1100^{\circ}C$ | | $1150^{\circ}C$ | | $940^{\circ}C$ | | $1120^{\circ}C$ | |
| $T_W$ | $1193^{\circ}C$ | | $1198^{\circ}C$ | | $1193^{\circ}C$ | | $1193^{\circ}C$ | |
| $T_{13}$ | $693^{\circ}C$ | | | | | | | |
| $T_{14.5}$ | $652^{\circ}C$ | | | | | | | |
| log.visc $(1550^{\circ}C)$ | 2.07 | | 2.11 | | 2.17 | | 2.17 | |
| Acid durab. | 7.2 | | 9.3 | | 7.3 | | 4.9 | |

TABLE I : EXAMPLES Contd..

| | 9 | | 10 | | 11 | | 12 | |
|---|---|---|---|---|---|---|---|---|
| | Mol% | Wt% | Mol% | Wt% | Mol% | Wt% | Mol% | Wt% |
| $SiO_2$ | 62.0 | 54.5 | 62.0 | 53.7 | 62.5 | 54.8 | 62.0 | 54.4 |
| $Al_2O_3$ | 10.0 | 14.9 | 10.0 | 14.7 | 10.0 | 14.9 | 10.0 | 14.9 |
| $B_2O_3$ | 10.0 | 10.2 | 10.0 | 10.0 | 10.5 | 10.7 | 10.0 | 10.2 |
| MgO | 6.5 | 3.9 | 6.0 | 3.6 | 6.0 | 3.5 | 6.0 | 3.6 |
| CaO | 6.5 | 5.3 | 6.0 | 4.8 | 6.0 | 4.9 | 7.0 | 5.7 |
| BaO | 5.0 | 11.2 | 6.0 | 13.2 | 5.0 | 11.2 | 5.0 | 11.2 |
| $TiO_2$ | – | – | – | – | – | – | – | – |
| $P_2O_5$ | – | – | – | – | – | – | – | – |
| $Fe_2O_3$ | – | – | – | – | – | – | – | – |
| $SiO_2$+ $Al_2O_3$ } | 72.0 | – | 72.0 | – | 72.0 | – | 72.5 | – |
| $\Sigma$ RO | 18.0 | – | 18.0 | – | 18.0 | – | 17.5 | – |
| CTE | $44.7 \times 10^{-7}$ | | $45.7 \times 10^{-7}$ | | $43.3 \times 10^{-7}$ | | $45.0 \times 10^{-7}$ | |
| $T_L$ | $1070^{\circ}C$ | | $1080^{\circ}C$ | | $1080^{\circ}C$ | | $1105^{\circ}C$ | |
| $T_W$ | $1193^{\circ}C$ | | $1187^{\circ}C$ | | $1197^{\circ}C$ | | $1190^{\circ}C$ | |
| $T_{13}$ | $692^{\circ}C$ | | | | | | | |
| $T_{14.5}$ | $650^{\circ}C$ | | | | | | | |
| log.visc ($1550^{\circ}C$) | 2.12 | | 2.13 | | – | | 2.15 | |
| Acid durab. | 6.6 | | 6.6 | | 7.2 | | 6.3 | |

TABLE I : EXAMPLES Contd..

| | 13 | | 14 | | 15 | | 16 | |
|---|---|---|---|---|---|---|---|---|
| | Mol% | Wt% | Mol% | Wt% | Mol% | Wt% | Mol% | Wt% |
| $SiO_2$ | 61.0 | 53.5 | 61.7 | 54.3 | 60.0 | 52.2 | 61.0 | 53.4 |
| $Al_2O_3$ | 10.0 | 14.9 | 10.0 | 14.9 | 12.0 | 17.7 | 11.0 | 16.3 |
| $B_2O_3$ | 10.0 | 10.2 | 10.0 | 10.2 | 10.0 | 10.1 | 10.0 | 10.1 |
| MgO | 7.0 | 4.1 | 7.1 | 4.2 | 7.0 | 4.0 | 7.0 | 4.1 |
| CaO | 6.0 | 4.9 | 6.0 | 4.9 | 6.0 | 4.9 | 6.0 | 4.9 |
| BaO | 5.0 | 11.3 | 5.0 | 11.2 | 5.0 | 11.1 | 5.0 | 11.2 |
| $TiO_2$ | 1.0 | 1.1 | – | – | – | – | – | – |
| $P_2O_5$ | – | – | – | – | – | – | – | – |
| $Fe_2O_3$ | – | – | 0.2 | 0.3 | – | – | – | – |
| $SiO_2$+ $Al_2O_3$ | 71.0 | – | 71.7 | – | 72.0 | – | 72.0 | – |
| $\Sigma$ RO | 18.0 | – | 18.1 | – | 18.0 | – | 18.0 | – |
| CTE | $43.8 \times 10^{-7}$ | | $44.0 \times 10^{7}$ | | $44.0 \times 10^{-7}$ | | $42.7 \times 10^{-7}$ | |
| $T_L$ | 1080°C | | 1115°C | | 1055°C | | 1100°C | |
| $T_W$ | 1175°C | | 1190°C | | 1197°C | | 1186°C | |
| $T_{13}$ | | | | | | | 699°C | |
| $T_{14.5}$ | 648°C | | 650°C | | | | 660°C | |
| log.visc (1550°C) | | | | | 2.19 | | 2.15 | |
| Acid durab. | 8.3 | | 7.4 | | 11.1 | | 9.3 | |

TABLE I : EXAMPLES Contd..

| | 17 | | 18 | | 19 | | 20 | |
|---|---|---|---|---|---|---|---|---|
| | Mol% | Wt% | Mol% | Wt% | Mol% | Wt% | Mol% | Wt% |
| $SiO_2$ | 61.5 | 54.0 | 62.5 | 55.2 | 60.0 | 52.1 | 62.0 | 53.9 |
| $Al_2O_3$ | 10.5 | 15.6 | 9.5 | 14.2 | 12.0 | 17.7 | 10.0 | 14.8 |
| $B_2O_3$ | 10.0 | 10.2 | 10.0 | 10.2 | 10.0 | 10.0 | 9.0 | 9.1 |
| MgO | 7.0 | 4.1 | 7.0 | 4.2 | 6.5 | 3.8 | 6.5 | 3.8 |
| CaO | 6.0 | 4.9 | 6.0 | 4.9 | 6.5 | 5.3 | 6.5 | 5.3 |
| BaO | 5.0 | 11.2 | 5.0 | 11.3 | 5.0 | 11.1 | 5.0 | 11.1 |
| $TiO_2$ | – | – | – | – | – | – | – | – |
| $P_2O_5$ | – | – | – | – | – | – | 1.0 | 2.0 |
| $Fe_2O_3$ | – | – | – | – | – | – | – | – |
| $SiO_2+$ $Al_2O_3$ | 72.0 | – | 72.0 | – | 72.0 | – | 72.0 | – |
| $\Sigma$ RO | 18.0 | – | 18.0 | – | 18.0 | – | 18.0 | – |
| CTE | $43.8 \times 10^{-7}$ | | $43.8 \times 10^{-7}$ | | $44.5 \times 10^{-7}$ | | | |
| $T_L$ | $1105^{\circ}C$ | | $1120^{\circ}C$ | | $1050^{\circ}C$ | | $1100^{\circ}C$ | |
| $T_W$ | $1190^{\circ}C$ | | | | | | | |
| $T_{13}$ | | | | | | | | |
| $T_{14.5}$ | | | | | | | | |
| log.visc $(1550^{\circ}C)$ | | | | | | | | |
| Acid durab. | | | 6.5 | | 9.5 | | 10.1 | |

TABLE I : EXAMPLES Contd..

| | 21 | | 22 | | 23 | | 24 | |
|---|---|---|---|---|---|---|---|---|
| | Mol% | Wt% | Mol% | Wt% | Mol% | Wt% | Mol% | Wt% |
| $SiO_2$ | 62.0 | 53.8 | 62.0 | 55.2 | 60.0 | 51.1 | 62.0 | 54.2 |
| $Al_2O_3$ | 10.0 | 14.7 | 10.0 | 15.1 | 11.0 | 15.9 | 10.5 | 15.6 |
| $B_2O_3$ | 9.0 | 9.1 | 11.0 | 11.3 | 10.0 | 9.5 | 10.5 | 10.6 |
| $MgO$ | 6.5 | 3.8 | 6.5 | 3.9 | 6.0 | 3.4 | 6.0 | 3.5 |
| $CaO$ | 6.5 | 5.3 | 6.5 | 5.4 | 6.0 | 4.9 | 6.0 | 4.9 |
| $BaO$ | 6.0 | 13.3 | 4.0 | 9.1 | 7.0 | 15.2 | 5.0 | 11.2 |
| $TiO_2$ | - | - | - | - | - | - | - | - |
| $P_2O_5$ | - | - | - | - | - | - | - | - |
| $Fe_2O_3$ | - | - | - | - | - | - | - | - |
| $SiO_2+Al_2O_3$ | 72.0 | - | 72.0 | - | 71.0 | - | 72.5 | - |
| $\Sigma$ RO | 19.0 | - | 17.0 | - | 19.0 | - | 17.0 | - |
| CTE | $46.0 \times 10^{-7}$ | | $41.0 \times 10^{-7}$ | | $46.9 \times 10^{-7}$ | | $43.5 \times 10^{-7}$ | |
| $T_L$ | $1110^{\circ}C$ | | $1100^{\circ}C$ | | $1075^{\circ}C$ | | $1100^{\circ}C$ | |
| $T_W$ | $1187^{\circ}C$ | | $1198^{\circ}C$ | | $1186^{\circ}C$ | | $1194^{\circ}C$ | |
| $T_{13}$ | | | | | $685^{\circ}C$ | | | |
| $T_{14.5}$ | | | | | $646^{\circ}C$ | | | |
| log.visc $(1550^{\circ}C)$ | | | | | 2.05 | | | |
| Acid durab. | 4.8 | | 9.5 | | 10.4 | | 8.2 | |

TABLE I : EXAMPLES Contd..

| | 25 | | 26 | | 27 | |
|---|---|---|---|---|---|---|
| | Mol% | Wt% | Mol% | Wt% | Mol% | Wt% |
| $SiO_2$ | 62.0 | 53.8 | 62.5 | 54.2 | 63.0 | 56.1 |
| $Al_2O_3$ | 10.5 | 15.4 | 10.5 | 15.5 | 9.5 | 14.4 |
| $B_2O_3$ | 10.5 | 10.5 | 11.0 | 11.1 | 11.5 | 11.9 |
| MgO | 5.7 | 3.3 | 3.0 | 1.7 | 6.0 | 3.6 |
| CaO | 5.7 | 4.6 | 8.0 | 6.5 | 6.0 | 5.0 |
| BaO | 5.6 | 12.4 | 5.0 | 11.1 | 4.0 | 9.1 |
| $TiO_2$ | – | – | – | – | – | – |
| $P_2O_5$ | – | – | – | – | – | – |
| $Fe_2O_3$ | – | – | – | – | – | – |
| $SiO_2+$ $Al_2O_3$ | 72.5 | – | 73.0 | – | 72.5 | |
| $\Sigma$ RO | 17.0 | – | 16.0 | – | 16.0 | – |
| CTE | $43.1 \times 10^{-7}$ | | $43.8 \times 10^{-7}$ | | $40.6 \times 10^{-7}$ | |
| $T_L$ | 1080°C | | 1090°C | | 1110°C | |
| $T_W$ | 1180°C | | 1212°C | | 1207°C | |
| $T_{13}$ | 692°C | | | | | |
| $T_{14.5}$ | 651°C | | | | | |
| log.visc (1550°C) | 2.24 | | | | | |
| Acid durab. | 7.3 | | | | 10.1 | |

TABLE II : COMPARATIVE EXAMPLES

| | 28 | | 29 | | 30 | |
|---|---|---|---|---|---|---|
| | Mol% | Wt% | Mol% | Wt% | Mol% | Wt% |
| $SiO_2$ | 58.8 | 49.4 | 63.5 | 56.4 | 62.0 | 50.1 |
| $Al_2O_3$ | 9.8 | 14.0 | 8.5 | 12.8 | 10.0 | 13.7 |
| $B_2O_3$ | 12.7 | 12.4 | 10.0 | 10.3 | 11.0 | 10.3 |
| $MgO$ | 5.0 | 2.8 | 5.0 | 11.3 | 6.0 | 3.3 |
| $CaO$ | 5.9 | 4.6 | 6.0 | 5.0 | – | – |
| $BaO$ | 7.8 | 16.8 | 7.0 | 4.2 | 11.0 | 22.6 |
| $TiO_2$ | – | – | – | – | – | – |
| $P_2O_5$ | – | – | – | – | – | – |
| $Fe_2O_3$ | – | – | – | – | – | – |
| $SiO_2 + Al_2O_3$ | 68.6 | – | 72.0 | – | 72.0 | |
| $\Sigma\ RO$ | 18.7 | – | 18.0 | – | 17.0 | – |
| CTE | | | $43.0 \times 10^{-7}$ | | $48.0 \times 10^{-7}$ | |
| $T_L$ | 1000°C | | 1142°C | | 1120°C | |
| $T_W$ | 1125°C | | 1200°C | | 1200°C | |
| $T_{13}$ | 670°C | | | | | |
| $T_{14.5}$ | 631°C | | | | | |
| log.visc (1550°C) | 1.90 | | – | | 2.15 | |
| Acid durab. | 23.0 | | 6.2 | | 8.6 | |

## TABLE II : COMPARATIVE EXAMPLES Contd..

|  | 31 Mol% | 31 Wt% | 32 Mol% | 32 Wt% | 33 Mol% | 33 Wt% |
|---|---|---|---|---|---|---|
| $SiO_2$ | 64.5 | 56.1 | 61.0 | 57.9 | 64.0 | 55.4 |
| $Al_2O_3$ | 10.0 | 14.8 | 10.0 | 16.1 | 10.0 | 14.7 |
| $B_2O_3$ | 11.5 | 11.6 | 10.0 | 11.0 | 13.0 | 13.0 |
| $MgO$ | 4.0 | 2.3 | 7.0 | 4.4 | 3.0 | 1.7 |
| $CaO$ | 5.0 | 4.1 | 12.0 | 10.6 | 5.0 | 4.0 |
| $BaO$ | 5.0 | 11.1 | – | – | 5.0 | 11.1 |
| $TiO_2$ | – | – | – | – | – | – |
| $P_2O_5$ | – | – | – | – | – | – |
| $Fe_2O_3$ | – | – | – | – | – | – |
| $SiO_2 +$ $Al_2O_3$ | 74.5 | – | 71.0 | – | 74.0 | – |
| $\Sigma$ RO | 14.0 | – | 19.0 | – | 13.0 | – |
| CTE | $40.0 \times 10^{-7}$ | | $44.0 \times 10^{-7}$ | | $39.0 \times 10^{-7}$ | |
| $T_L$ | 1085°C | | 1180°C | | 1160°C | |
| $T_W$ | 1238°C | | 1173°C | | 1250°C | |
| $T_{13}$ | 695°C | | 704°C | | | |
| $T_{14.5}$ | 650°C | | 668°C | | | |
| log.visc (1550°C) | 2.38 | | 2.03 | | 2.4 | |
| Acid durab. | 1.0 | | – | | 7.5 | |

In Table III there are shown the $T_{2.5}$ values (in °C) and $T_W$-$T_L$ values (in °C) of the glass compositions of the invention.

The $T_{2.5}$ value of a glass composition is the temperature (in °C) at which $\log_{10} \eta = 2.5$, where $\eta$ is the viscosity of the glass melt. The $T_{2.5}$ value gives an indication of the difficulty of melting a glass composition. For economic melting and refining a relatively low value is desirable. All the glass compositions in Table III for which this property was measured show a relatively low $T_{2.5}$ value.

The value $T_W$-$T_L$ provides a measure of the stability of the glass composition at forming temperatures. The greater the number, the more stable is the glass, and hence the ease with which the glass composition can be manufactured. In Table III all the compositions, with the exception of that of Example 6, have a $T_W$-$T_L$ value which is 75°C or more, showing that the compositions in accordance with the invention are stable at forming temperatures.

EP 0 559 389 A2

TABLE III

$T_{2.5}$ VALUES AND $T_W - T_L$ VALUES

| EXAMPLE No | $T_{2.5}$ | $T_W-T_L$ | EXAMPLE No | $T_{2.5}$ | $T_W-T_L$ |
|---|---|---|---|---|---|
| 1 | 1433 | 94 | 15 | 1460 | 142 |
| 2 | 1454 | 130 | 16 | 1442 | 86 |
| 3 | 1461 | 118 | 17 | - | 85 |
| 4 | 1467 | 123 | 18 | - | - |
| 5 | 1442 | 93 | 19 | - | - |
| 6 | 1448 | 48 | 20 | - | - |
| 7 | 1445 | 253 | 21 | - | 77 |
| 8 | 1460 | 73 | 22 | - | 88 |
| 9 | 1448 | 123 | 23 | 1422 | 111 |
| 10 | 1451 | 107 | 24 | - | 94 |
| 11 | - | 117 | 25 | 1428 | 100 |
| 12 | 1445 | 85 | 26 | - | 122 |
| 13 | - | 95 | 27 | - | 93 |
| 14 | - | 75 | | | |

## Claims

1. A boroaluminosilicate glass composition consisting essentially of the following components:-

16

| $SiO_2$ | 60.0 - 63.0 mol%, |
|---|---|
| $Al_2O_3$ | 9.5 - 12.0 mol%, |

the total amount of $SiO_2$ + $Al_2O_3$ being within the range 70.5 - 73.0 mol%,

| $B_2O_3$ | 9.0 - | 11.5 mol%, |
|---|---|---|
| $MgO$ | 3.0 - | 13.0 mol%, |
| $CaO$ | 0 - | 8.0 mol%, |
| $BaO$ | 3.0 - | 9.0 mol%, |

the total amount of $MgO$ + $CaO$ + $BaO$ being within the range 16.0 - 19.0 mol%,

| $TiO_2$ | 0 - 1.0 mol%, |
|---|---|
| $P_2O_5$ | 0 - 1.0 mol%, and |
| $Fe_2O_3$ | 0 - 0.2 mol%, |

the glass composition being free of alkali-metal oxide, free of strontium oxide and free of zinc oxide.

2. A glass composition according to claim 1, wherein the total amount of $SiO_2$ + $Al_2O_3$ in the composition is from 71.0 to 72.5 mol%.

3. A glass composition according to claim 1 or 2, wherein the amount of $B_2O_3$ in the glass composition is from 10.0 to 11.0 mol%.

4. A glass composition according to claim 2 or 3, wherein the amount of $SiO_2$ is from 61.0 to 63.0 mol% and the amount of $Al_2O_3$ is from 9.5 to 10.5 Mol%, with the total amount of $SiO_2$ + $Al_2O_3$ being within the range 71.0 to 72.5 mol%.

5. A glass composition according to any one of the preceding claims, wherein the amount of $MgO$ is from 5.0 to 13.0 mol%, the amount of $CaO$ is from 0 to 8.0 mol% and the amount of $BaO$ is from 4.0 to 8.0 mol%.

6. A glass composition according to any one of the preceding claims, consisting essentially of the following components:-

| $SiO_2$ | 61.0 - 63.0 mol%, |
|---|---|
| $Al_2O_3$ | 9.5 - 10.5 mol%, |

the total amount of $SiO_2$ + $Al_2O_3$ being within the range 71.0 - 72.5 mol%,

| $B_2O_3$ | 10.0 - 11.0 mol%, |
|---|---|
| $MgO$ | 5.0 - 13.0 mol%, |
| $CaO$ | 0 - 8.0 mol%, |
| $BaO$ | 4.0 - 8.0 mol%, |

the total amount of $MgO$ + $CaO$ + $BaO$ being within the range 16.0 - 19.0 mol%.

7. A glass composition according to claim 6, wherein the amount of $MgO$ is from 5.0 to 7.0 mol%, the amount of $CaO$ is from 5.0 to 7.0 mol%, and the amount of $BaO$ is from 4.0 to 8.0 mol%.

8. A glass composition according to claim 1, consisting essentially of the following components:-

| | |
|---|---|
| $SiO_2$ | 62.0 mol%, |
| $Al_2O_3$ | 10.0 mol%, |
| $B_2O_3$ | 10.0 mol%, |
| $MgO$ | 6.5 mol%, |
| $CaO$ | 6.5 mol%, |
| $BaO$ | 5.0 mol%. |

9. A glass composition according to any one of the preceding claims, having a working temperature ($T_W$) of 1200°C or less.

10. A glass composition according to any one of the preceding claims having a liquidus temperature ($T_L$) of 1120°C or below.

11. A glass composition according to any one of the preceding claims having a strain point ($T_{14.5}$) greater than 640°C.

12. A glass composition according to any one of the preceding claims having a liquidus temperature which is at least 75°C below the working temperature ($T_W$) of the glass composition.

13. A glass composition according to any one of the preceding claims, having a $T_{2.5}$ value of 1467°C or less, $T_{2.5}$ being the temperature T (in °C) at which the viscosity ($\eta$) of the glass melt is such that $\log_{10} \eta = 2.5$.

14. A liquid crystal device incorporating an array of thin film transistors formed on the surface of a sheet of a glass composition as claimed in any one of the preceding claims.